# EUROPÄISCHE PATENTSCHRIFT

(11) **EP 1 716 203 B1**
(45) Veröffentlichungstag und Bekanntmachung des Hinweises auf die Patenterteilung: **16.04.2014**
(21) Anmeldenummer: 05707154.0
(22) Anmeldetag: 03.02.2005
(51) Int. Cl.: C08L 55/02, C08L 53/02, C08L 51/04, C08L 25/06

(54) **FORMMASSEN AUS STYROLPOLYMEREN MIT MATTER OBERFLÄCHE**
MOULDING MATERIALS CONSISTING OF STYRENE POLYMERS WITH A MAT SURFACE
MATIERES MOULABLES CONSTITUEES DE POLYMERES DE STYRENE A SURFACE MATE

(30) Priorität: 09.02.2004 DE 102004006442
(43) Veröffentlichungstag der Anmeldung: 02.11.2006
(73) Patentinhaber: Styrolution GmbH, 60325 Frankfurt am Main (DE)
(72) Erfinder: HUBER, Robert, 67117 Limburgerhof (DE)
(74) Vertreter: Jacobi, Markus Alexander
(86) Internationale Anmeldenummer: PCT/EP2005/001055
(87) Internationale Veröffentlichungsnummer: WO 2005/075561

(56) Entgegenhaltungen:
- EP-A- 0 791 631
- EP-A- 1 118 639
- WO-A-00/36010
- WO-A-99/46330
- WO-A-03/057779
- DE-A1- 19 817 993
- GB-A- 1 428 974
- GB-A- 2 056 465
- US-A- 5 760 134

## Beschreibung

Die Erfindung betrifft Polymermischungen, enthaltend
A) 50 - 95 Gew.-% Acrylnitril-Butadien-Styrol-Polymer (ABS)
B) 4-49 Gew.-% Schlagzäh-Polystyrol (HIPS)
C) 1 - 46 Gew.-% eines thermoplastischen Elastomer auf Basis von Styrol (S-TPE)
wobei die Summe aus A), B) und C) 100 Gew.-% ergeben.

Schlagzähe thermoplastische Styrol-Acrylnitril-Copolymere (SAN) mit Propfkautschuken auf Basis von Polybutadien oder Acrylester sind dem Fachmann als ABS- bzw. ASA bekannt. Zur Veränderung des Eigenschaftsprofils werden diese auch mit anderen thermoplastischen Polymeren, insbesondere Polycarbonat (PC) oder Polyamid (PA) zu Blends verarbeitet.

Die WO 00/36010 beschreibt thermoplastische Formmassen aus ABS- oder ASA-Polymeren, die zur Verbesserung der Fließfähigkeit bei gleichzeitig guter Entformbarkeit mit elastomeren Styrol-Butadien-Blockcopolymeren gemischt werden.

Aus der WO 99/46330 sind Mischungen aus elastomeren und steifen Styrol-Butadien-blockcopolymeren mit Polystyrol bekannt.

US-Patent 5,760,134 beschreibt Polymermischungen enthaltend A) 30 bis 90 Gew.-% eines Pfropfcopolymers, bei welchem SAN auf einen Polyacrylatkautschuk gepfropft ist (= ASA), B) 1 bis 50 Gew.-% eines Styrolhomopolymers oder eines Styrolcopolymers mit Acrylnitril und C) 1 bis 70 Gew.-% eines kautschukelastischen Blockcopolymers aus mindestens einem vinylaromatischen A-Hartblock und mindestens einem B/A-Weichblock, bevorzugt aus Butadien/Styrol.

Aufgrund der Unverträglichkeit zwischen ABS und Polystyrol werden Blends aus ABS oder ASA und Standardpolystyrol (GPPS) oder Schlagzäh-Polystyrol (HIPS) kommerziell nicht eingesetzt.

Aufgabe der Erfindung war es, Formmassen aus ABS-Polymeren mit matter Oberfläche und ausreichenden mechanischen Eigenschaften bereitzustellen, die kostengüns-tiger sind als momentan eingesetzte Frommassen aus ABS. Ferner sollten mit den Formmassen eine verringerte Taktzeit beim Thermoformen erreichbar sein, wodurch zusätzlich ein Einsparpotential erreicht wird.

Demgemäß wurden die oben beschriebenen Formmassen gefunden.

Bevorzugt enthalten die Polymermischungen die Komponenten
A) 65 - 90 Gew.-% Acrylnitril-Butadien-Styrol-Polymer (ABS),
B) 5 - 25 Gew.% Schlagzäh-Polystyrol (HIPS) und
C) 5 - 15 Gew.% eines thermoplastischen Elastomer auf Basis von Styrol (S-TPE)

### Komponente A)

Als Komponente A eignen sich die als Acrylnitril-Butadien-Styrol-Polymer (ABS) bekannten Polymeren. Sie bestehen in der Regel aus einer Styrol-Acrylnitril-Copolymer Matrix (SAN) mit einem mittleren Molekulargewicht M_{w} im Bereich von 40.000 bis 200.000 g/mol und einem Pfropfkautschuk. Die SAN-Matrix kann in bekannter Weise durch Substanz-, Lösungs- Suspension-, Fällungs- oder Emulsionspolymerisation erhalten werden. Der Pfropfkautschuk besteht in der Regel aus einem Pfropfkern aus einem Polydien, auf den eine Propfhülle aus Styrol aufgebracht ist.

### Komponente B)

Als Komponente B) eignet sich Schlagzäh-Polystyrol (HIPS). Schlagzäh-Polystyrol kann durch Masse- oder Lösungspolymerisation von Styrol in Gegenwart von Polybutadien oder Styrol-Butadien-Blockcopolymeren erhalten werden. Dabei entsteht eine Matrix aus Polystyrol mit eingeschlossenen Kautschukpartikel, die unterschiedliche Morphologienausbilden können, z. B. Kapselteilchen oder Zellenteilchen, und unterschiedliche mittlere Teilchengrößen aufweisen können.

### Komponente C)

Die Komponente C) wirkt als Verträglichkeitsvermittler zwischen den Komponenten A) und B), so dass Formmassen mit ausreichenden mechanischen Eigenschaften erhalten werden.

Bevorzugt weist das S-TPE eine Reißdehnung von mehr als 300 %, besonders bevorzugt mehr als 500 %, insbesondere mehr als 600 %, gemessen nach ISO 527, auf und wird in einer Menge im Bereich von 1 bis 49 Gew.-%, bevorzugt 5 bis 15 Gew.-%, bezogen auf die Polystyrolformmasse, zugemischt. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.% Styrol und 25 bis 70 Gew.% Butadien. Besonders bevorzugt hat ein Block (S/B) einen Butadienanteil von 35 bis 70 Gew.-% und einen Styrolanteil von 30 bis 65 Gew-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12-16%.

Die erfindungsgemäßen Polymermischungen können z. B. durch Thermoformen zu Formteilen mit matter Oberfläche und ausreichenden mechanischen Eigenschaften verarbeitet werden. Diese Formteile können beispielsweise im Automobilbau, insbesondere für Armaturen in Nutzfahrzeugen oder für matte Displaytafeln verwendet werden. Dabei kann die Taktzeit im Vergleich zu reinen ABS-Formmassen um bis zu 40 % gesenkt werden.

### Beispiele:

### Einsatzstoffe:

- ABS:: Terluran ® HI 10 (ABS der BASF Aktiengesellschaft mit MVR 220/10 von 7.0 cm³/10 min)
- HIPS: Schlagzähpolystyrol PS 485 I der BASF Aktiengesellschaft mit MVR 220/5 von 5.0 cm³/10 min
- SB: Styroflex^{®} 2G66 (Thermoplastisches Elastomer auf Basis eines Styrol-Butadien-Blockcopolymeren mit statistischem S/B-Mittelblock der BASF Aktiengesellschaft)

### Prüfmethoden:

Die Probekörper für die mechanischen Prüfungen wurden längs und quer aus den Platten geschnitten. E-Modul, Streckspannung, Bruchspannung und Streckdehnung wurden im Zugversuch nach ISO 527-2 bestimmt.

Die Vicat-Erweichungstemperaturen VST/A und VST/B wurden nach der Prüfvorschrift DIN ISO 306 bestimmt.

Der Glanz wurde nach DIN 67530 unter einem Messwinkel von 60° gemessen.

Die Messung der Durchstoßfestigkeit erfolgte nach ISO 6603.

### Beispiele 1 - 5 und Vergleichsversuche V1, V2

Die Einsatzstoffe wurden in den in Tabelle 1 angegebenen Gewichtsteilen zu 300 mm breiten Platten von 2 mm Dicke extrudiert. Glanz und mechanische Eigenschaften sind in Tabelle 1 zusammengestellt.

### Beispiele 6

Die Einsatzstoffe wurden in den in Tabelle 1 angegebenen Gewichtsteilen zu 1200 mm breiten Platten von 1,5 mm Dicke mit Narbung an der Oberseite extrudiert. Glanz und mechanische Eigenschaften sind in Tabelle 1 zusammengestellt.

**Tabelle 1**

| | V1 | V2 | Bsp. 1 | Bsp. 2 | Bsp 3 | Bsp. 4 | Bsp 5 | Bsp. 6 |
|---|---|---|---|---|---|---|---|---|
| ABS | 100 | 95 | 90 | 85 | 80 | 75 | 70 | 60 |
| HIPS | | 5 | 5 | 10 | 15 | 15 | 20 | 30 |

| SB | | | 5 | 5 | 5 | 10 | 10 | 10 |
|---|---|---|---|---|---|---|---|---|
| Glanz Vorderseite | 84 | 69 | 79 | 66 | 59 | 51 | 39 | |
| Glanz Rückseite | 83 | 71 | 68 | 58 | 50 | 45 | 31 | 2 |
| Durchstoß [Nm] | 31,5 | 19,3 | 26,3 | 18,8 | 15,2 | 19,5 | 14,5 | 7,1 |
| VST/B [°C] | 89,4 | 88,5 | 84,5 | 84,5 | 89,1 | 80,0 | 81,0 | 80,5 |
| VST/A [°C] | 104,8 | 104,4 | 104,3 | 102,2 | 103,7 | 103,6 | 103,7 | 102,5 |

| längs | | | | | | | | |
|---|---|---|---|---|---|---|---|---|
| E-Modul [MPa] | 1776 | 1760 | 1613 | 1618 | 1608 | 1441 | 1440 | 1303 |
| Stecksp. [Mpa] | 37,1 | 34,1 | 32,7 | 31,5 | 30,6 | 28,4 | 27,4 | 22,6 |
| Bruchsp.[MPa] | 27,6 | 26,3 | 25,7 | 25,7 | 25,5 | 24,7 | 24,9 | 21 |
| Steckdehn. [%] | 2,9 | 2,6 | 3,2 | 2,8 | 2,7 | 3,2 | 3,0 | 2,3 |
| Bruchdehn. Nom. [%] | 11 | 37 | 59 | 61 | 56 | 69 | 72 | 28,6 |
| Brucharbeit [mJ/mm] | 196 | 536 | 815 | 824 | 760 | 881 | 905 | 318 |

| quer | | | | | | | | |
|---|---|---|---|---|---|---|---|---|
| E-Modul [MPa] | 1755 | 1745 | 1475 | 1503 | 1524 | 1250 | 1247 | 1119 |
| Stecksp. [Mpa] | 37,5 | 33,1 | 28,1 | 28,7 | 27,0 | 22,06 | 21,3 | 18,1 |
| Bruchsp.[MPa] | 27,3 | 25,2 | 22,5 | 21,9 | 22,2 | 20,6 | 20,0 | 17,3 |
| Steckdehn. [%] | 2,9 | 2,4 | 2,5 | 2,3 | 2,2 | 2,4 | 2,3 | 2,1 |
| Bruchdehn. Nom. [%] | 8 | 29 | 48 | 33 | 22 | 46 | 33 | 17,4 |
| Brucharbeit [mJ/mm] | 150 | 408 | 565 | 393 | 273 | 427 | 336 | 159 |

## Patentansprüche

1. Polymermischungen, enthaltend
A) 50 - 95 Gew.-% Acrylnitril-Butadien-Styrol-Polymer (ABS)
B) 4 - 49 Gew.-% Schlagzäh-Polystyrol (HIPS)
C) 1 - 46 Gew.-% eines thermoplastischen Elastomer auf Basis von Styrol (S-TPE)
wobei die Summe aus A), B) und C) 100 Gew.-% ergeben.

2. Polymermischungen nach Anspruch 1, **dadurch gekennzeichnet, dass** sie
A) 65 - 90 Gew.-% Acrylnitril-Butadien-Styrol-Polymer (ABS)
B) 5 - 25 Gew.-% Schlagzäh-Polystyrol (HIPS)
C) 5 - 15 Gew.-% eines thermoplastischen Elastomer auf Basis von Styrol (S-TPE)

3. Polymermischungen nach Anspruch 1 oder 2, **dadurch gekennzeichnet, dass** die Komponente C) ein Styrol-Butadien-Blockcopolymer der Struktur S-(S/B)-S, wobei S für einen Polystyrolblock und S/B für einen Styrol- Butadien-Copolymerblock steht, ist.

4. Polymermischungen nach Anspruch 3, **dadurch gekennzeichnet, dass** der Styro-Butadien-Copolymerblock S/B der Komponente C) eine statistische Verteilung der Styrol- und Butadieneinheiten aufweist.

5. Polymermischungen nach einem der Ansprüche 1 bis 4, **dadurch gekennzeichnet, dass** der die Komponente C) aus 15 bis 50 Gew.-% Butadien und 50 bis 85 Gew.-% Styrol aufgebaut ist.

6. Polymermischung nach einem der Ansprüche 3 bis 5, **dadurch gekennzeichnet, dass** der Styrol-Butadien-Copolymerblock (S/B) der Komponente C) aus 30 bis 70 Gew.-% Styrol und 25 bis 70 Gew.-% Butadien aufgebaut ist.

7. Polymermischung nach einem der Ansprüche 3 bis 6, **dadurch gekennzeichnet, dass** der Anteil der Polystyrolblöcke S im Bereich von 5 bis 40 Gew.-% liegt.

8. Polymermischung nach einem der Ansprüche 3 bis 7, **dadurch gekennzeichnet, dass** der 1,2-Vinylgehalt im Styrol-Butadien-Copolymerblock (S/B) unter 20 % beträgt.

## Claims

1. A polymer mixture, comprising
A) from 50-95% by weight of acrylonitrile-butadiene-styrene polymer (ABS)
B) from 4-49% by weight of impact-resistant polystyrene (HIPS)
C) from 1-46% by weight of a thermoplastic elastomer based on styrene (STPE)
where the entirety of A), B) and C) gives 100% by weight.

2. The polymer mixture according to claim 1, which comprises
A) from 65-90% by weight of acrylonitrile-butadiene-styrene polymer (ABS)
B) from 5-25% by weight of impact-resistant polystyrene (HIPS)
C) from 5-15% by weight of a thermoplastic elastomer based on styrene (STPE).

3. The polymer mixture according to claim 1 or 2, wherein component C) is a styrene-butadiene block copolymer of structure S-(S/B)-S, where S is a polystyrene block and S/B is a styrene-butadiene copolymer block.

4. The polymer mixture according to claim 3, wherein the styrene-butadiene copolymer block S/B of component C) has random distribution of the styrene units and butadiene units.

5. The polymer mixture according to any of claims 1 to 4, wherein component C) is composed of from 15 to 50% by weight of butadiene and from 50 to 85% by weight of styrene.

6. The polymer mixture according to any of claims 3 to 5, wherein the styrene-butadiene copolymer block (S/B) of component C) is composed of from 30 to 70% by weight of styrene and from 25 to 70% by weight of butadiene.

7. The polymer mixture according to any of claims 3 to 6, wherein the proportion of the polystyrene blocks S is in the range from 5 to 40% by weight.

8. The polymer mixture according to any of claims 3 to 7, wherein the 1,2-vinyl content in the styrene-butadiene copolymer block (S/B) is below 20%.

## Revendications

1. Mélanges de polymères, contenant
A) 50-95% en poids de polymère d'acrylonitrile-butadiène-styrène (ABS)
B) 4-49% en poids de polystyrène résistant aux chocs (HIPS)
C) 1-46% en poids d'un élastomère thermoplastique à base de styrène (S-TPE)
la somme de A), B) et C) étant égale à 100% en poids.

2. Mélanges de polymères selon la revendication 1, **caractérisés en ce qu'**ils contiennent
A) 65-90% en poids de polymère d'acrylonitrile-butadiène-styrène (ABS)
B) 5-25% en poids de polystyrène résistant aux chocs (HIPS)
C) 5-15% en poids d'un élastomère thermoplastique à base de styrène (S-TPE).

3. Mélanges de polymères selon la revendication 1 ou 2, **caractérisés en ce que** le composant C) est un copolymère à blocs de styrène-butadiène de structure S-(S/B)-S, où S représente un bloc de polystyrène et S/B un bloc de copolymère de styrène-butadiène.

4. Mélanges de polymères selon la revendication 3, **caractérisés en ce que** le bloc de copolymère de styrène-butadiène S/B du composant C) présente une répartition statistique des unités styrène et butadiène.

5. Mélanges de polymères selon l'une ou plusieurs des revendications 1 à 4, **caractérisés en ce que** le composant C) est constitué par 15 à 50% en poids de butadiène et 50 à 85% en poids de styrène.

6. Mélange de polymères selon l'une quelconque des revendications 3 à 5, **caractérisé en ce que** le bloc de copolymère de styrène-butadiène (S/B) du composant C) est constitué par 30 à 70% en poids de styrène et 25 à 70% en poids de butadiène.

7. Mélange de polymères selon l'une quelconque des revendications 3 à 6, **caractérisé en ce que** la proportion de blocs de polystyrène S se situe dans la plage de 5 à 40% en poids.

8. Mélange de polymères selon l'une quelconque des revendications 3 à 7, **caractérisé en ce que** la teneur en 1,2-vinyle dans le bloc de copolymère de styrène-butadiène (S/B) est inférieure à 20%.
